(19) Europäisches Patentamt
European Patent Office
Office européen des brevets

(11) **EP 0 943 890 B1**

(12) **EUROPEAN PATENT SPECIFICATION**

(45) Date of publication and mention
of the grant of the patent:
**28.02.2007 Bulletin 2007/09**

(51) Int Cl.:
***G01B 11/275*** (2006.01)

(21) Application number: **99200575.1**

(22) Date of filing: **26.02.1999**

(54) **Method and device for measuring the characteristic attitude angles of a vehicle**

Verfahren und Apparat zum Messen der karakteristischen Positionswinkel eines Fahrzeugs

Méthode et appareil pour mesurer les angles de positions caractéristiques d'un véhicule

(84) Designated Contracting States:
**DE ES FR IE IT**

(30) Priority: **16.03.1998 IT RE980027**

(43) Date of publication of application:
**22.09.1999 Bulletin 1999/38**

(73) Proprietor: **CORGHI S.p.A.**
**I-42015 Correggio Emilia (Reggio Emilia) (IT)**

(72) Inventor: **Corghi, Remo**
**42015 Correggio (Reggio Emilia) (IT)**

(74) Representative: **Corradini, Corrado et al**
**Studio Ing. C. CORRADINI & C. S.r.l.**
**4, Via Dante Alighieri**
**42100 Reggio Emilia (IT)**

(56) References cited:
**EP-A- 0 880 009**    **DE-C- 4 427 483**
**US-A- 4 303 338**

**Description**

This invention relates to aligning devices for measuring and correcting the characteristic attitude angles of a motor vehicle, and the method used for measuring said angles.

The characteristic angles of a vehicle attitude are:

- left, right and total front convergence
- left, right and total rear convergence
- right and left front camber
- right and left rear camber
- right and left incidence
- right and left kingpin
- front and rear set-back
- thrust angle
- track difference

The invention will be better understood from the following definitions of the characteristic angles:

- convergence: the angle formed between the plane perpendicular to the axis of each wheel and the longitudinal axis of symmetry of the vehicle;

- total convergence: angle resulting from the sum of the angles of convergence of the wheels pertaining to one and the same axle;

- camber: the angle formed between the plane perpendicular to the axis of each wheel and the vertical plane;

- incidence: the angle between the projection of the steering axis onto the vehicle longitudinal plane and the vertical;

- kingpin: the angle formed between the projection of the steering axis onto the vehicle transverse plane and the vertical;

- set-back: the misalignment between the wheels of one and the same axle and the vehicle axis of symmetry;

- thrust axis: the axis defined by the bisector of the total rear convergence angle;

- track difference: the angle between the line joining the wheels positioned on one and the same side, but pertaining to two different axles, and the vehicle axis of symmetry.

The known devices used for adjusting the attitude of a vehicle are based on angle transducers (or goniometers) which are applied to the vehicle wheel rims and mutually interact optically and/or electronically (see, for example, german patent DE-4 427 483).

Said devices measure the position of each wheel rim both relative to the wheel rims adjacent to it and to vertical planes and planes parallel and perpendicular to the vehicle axis of symmetry.

The data obtained are then processed by a processor which using known mathematical-geometric algorithms calculates the characteristic angles, compares them with correct data retained in its memory, and finally calculates and displays on a display, and possibly prints on a paper support, the corrections to be made to the mechanical characteristic angle adjustment members to return said angles to within the allowable values.

Besides being complicated to use, devices of this type introduce systematic measurement errors.

These errors are introduced into the measurement by the need to quantify any geometrical wheel rim deformations using data obtained during one revolution of the vehicle wheel.

To achieve at least one complete wheel revolution without involving considerable space, in known equipment the wheel has to be raised from the ground, so releasing the vehicle weight from the suspension-shock absorber unit.

However this procedure introduces a further systematic measurement error arising from the fact that during their working stroke the suspensions induce variations in the characteristic angles of the vehicle attitude, hence raising the wheel from the ground leads to the drawback of finding the wheels positioned in a different manner from that when in the normal running state.

These systematic errors are eliminated or at least reduced by an operation known as "compensation".

A further limit on current aligners is the time required by the operator to prepare the vehicle for measurement, with particular reference to the need to position each transducer very accurately on its respective wheel.

The object of this invention is to overcome the said drawbacks by providing a method for measuring the characteristic attitude angles which reduces the probability of measurement error, and a device for implementing the method which is quick to use, and in particular considerably decreases the time required to apply the transducers to the wheel.

The measurement method of the invention involves the use of four active matrix video cameras, each of which is coupled to a wheel rim by known means, and has its lens always pointing towards a fixed reference marker positioned at the front of a usual measurement site such as a vehicle lift.

Absolute positioning accuracy of each transducer (video camera) on the respective wheel relative to its axis is not required by the invention, for the reasons which will be apparent hereinafter.

In the method of the invention, while the vehicle is being positioned within said measurement site, each video camera begins to memorize, at predetermined time intervals, its own position and hence that of the wheel rim to which it is connected relative to the fixed reference marker, and also the distance which separates it therefrom.

According to the invention the compensation operation is effected by constructing, by interpolating the relative data, an irregular sinusoidal curve the period of which is known. Using mathematical algorithms of known type, a regular sinusoid and its mean value can be obtained from said curve.

The regular sinusoid enables the misalignment of the transducer relative to the wheel to be identified, together with wheel circularity errors, from which the correction factors for calculating the characteristic attitude angles are obtained.

When the device of the invention is on the measurement site the method also allows calculation of any bad positioning of the vehicle within the site.

The term "bad positioning of the vehicle within the measurement site" means that the longitudinal axis of symmetry of the vehicle does not coincide with the longitudinal axis of symmetry of the measurement site.

Having carried out the said operations, the invention then uses a processor to calculate the characteristic attitude angles, which are displayed on a display, and possibly reproduced on paper.

These data are then compared with the data contained in the processor memory, which then determines the correction values necessary to return the attitude within correct limits, and to display and possibly print these values.

Said method is implemented with the aid of a measurement device comprising:

- a usual measurement site consisting of a vehicle lift or a pit, in the front of which there is located at least one reference marker visible to all the video cameras rigid with those wheels on the same side of the vehicle. Said reference marker comprises four LEDs arranged at the vertices of a cross with perpendicular arms;

- four active matrix (CCD) video cameras, each of which is coupled to one of the vehicle wheel rims by known brackets, with the lens constantly pointing towards said reference marker;

- a processor which receives the data read by each video camera and reprocesses them to calculate all the characteristic attitude angles and their correction values;

- a display for displaying the processing of the data, and a printer for printing the results of the processing.

For a better understanding of the method and device of the invention, a preferred embodiment is described hereinafter by way of non-limiting example and illustrated on the accompanying drawings.

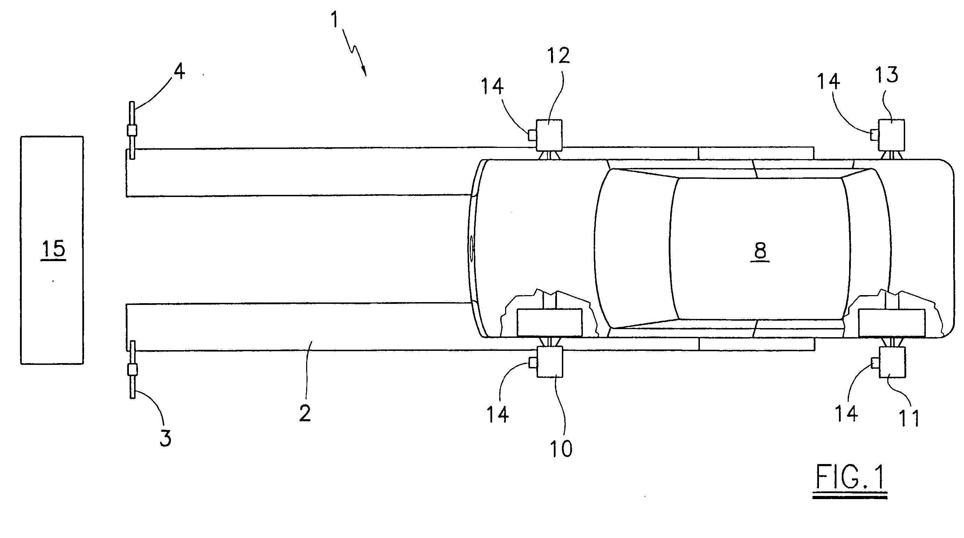

Figure 1 is a view of the invention from above, while a moving vehicle is being positioned on the measurement site.

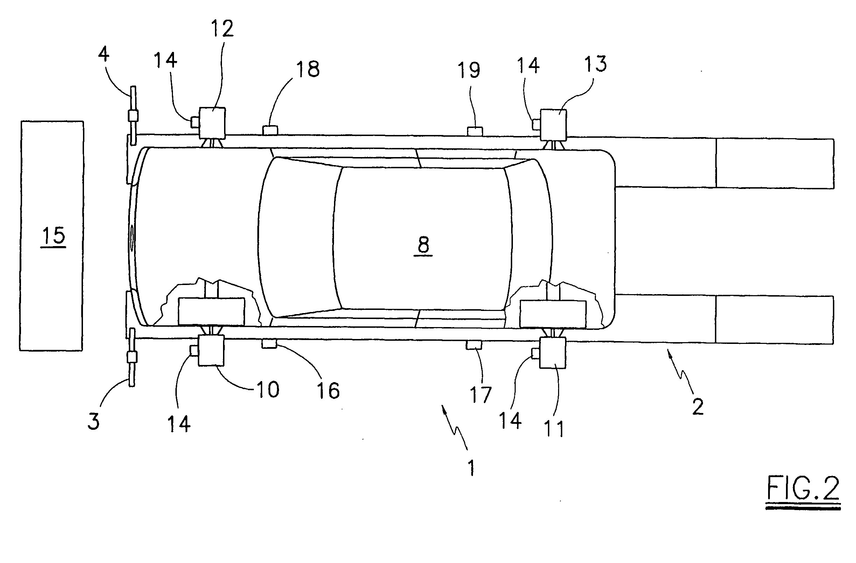

Figure 2 is a view of the invention from above, with the vehicle already positioned.

Figure 3 is a front view of a wheel equipped in accordance with the invention.

Figure 4 is a scheme of the measurement reference marker.

Figure 5 shows the image of the reference marker as seen by the measurement area of one of the video cameras when the reference marker is perfectly centered.

Figure 6 shows the image of the reference marker as seen by the measurement area of one of the video cameras when the vehicle has a camber angle other than zero.

Figure 7 shows the image of the reference marker as seen by the measurement area of one of the video cameras when the vehicle has a convergence angle other than zero.

Figure 8 shows the image of the reference marker as seen by the measurement area of one of the video cameras when the vehicle has a convergence angle and a camber angle both other than zero.

Figure 9 shows the projection of one of the arms of the cross-shaped reference marker on a plane not parallel to the reference marker.

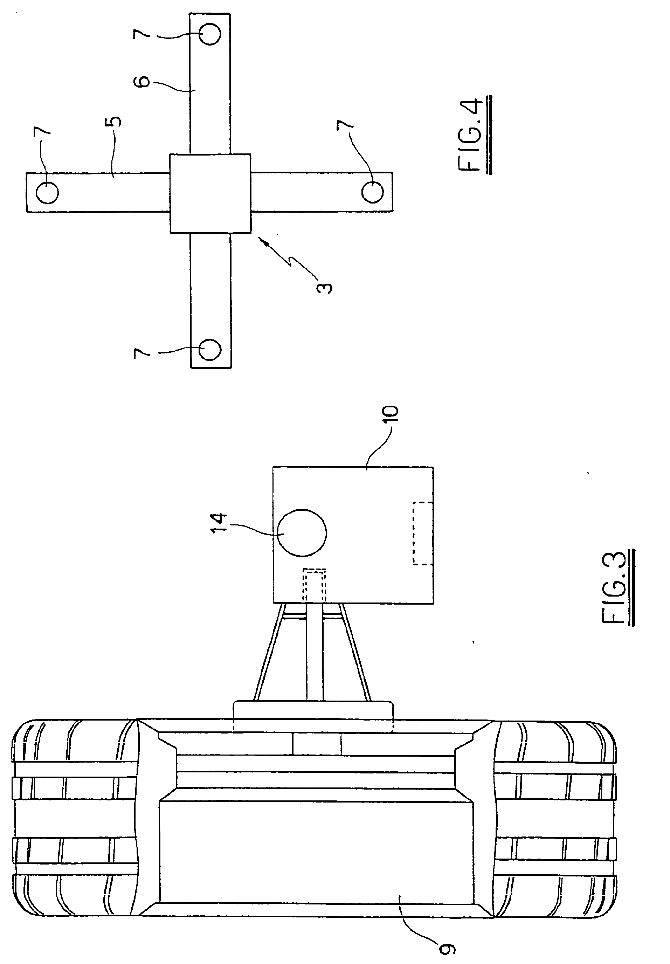

Said figures show a usual measurement site 1 consisting of a vehicle lift 2 which at its front supports two identical reference markers 3 and 4, also visible in Figure 4. Each of the reference markers 3 and 4 is in the form of a cross with perpendicular arms 5 and 6 respectively, at the vertices of which there are positioned four identical light emitting diodes, commonly known as LEDs 7.

Said reference markers are fixed by known means to the vehicle lift 2 such that the arm 5 is perpendicular to the plane of the lift 1 and the arm 6 is parallel to it.

Said figures also show a vehicle 8 having coupled to their wheel rims 9, by known means, four identical matrix (CCD) video cameras 10, 11, 12, 13 having their lenses 14 constantly pointing towards the reference markers 3 and 4.

The video cameras are coupled in such a manner as to rotate about an axis close to the wheel rim axis, and maintain their orientation substantially constant by gravity.

In particular, the video cameras 10 and 11 frame the reference marker 3, while the video cameras 12 and 13 frame the reference marker 4.

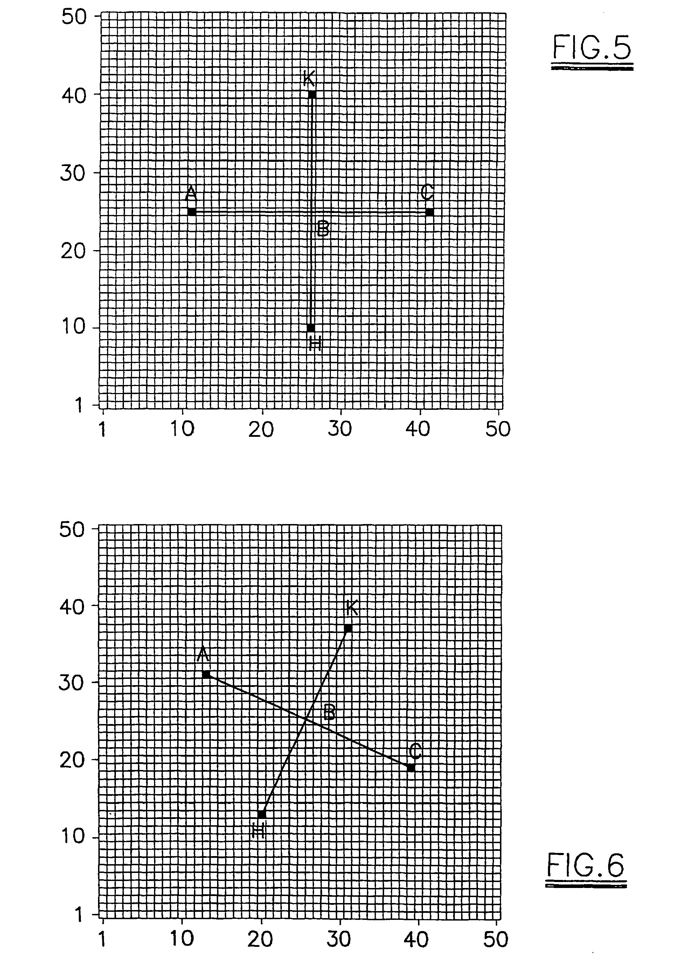

The video cameras 10, 11, 12, 13 are provided with lenses 14, the surface of which is divided into a given number of pixels. By way of example the active surface comprises 2048x2048 pixels. When a light ray strikes a pixel, an electrical pulse is generated and converted into a number, the value of which depends on the intensity of the light ray. To each lens pixel there is assigned one unequivocal position in the reference system illustrated in Figure 5.

In front of the vehicle lift 1 there is a unit 15 comprising a processor, a printer and a display, these not being shown as they are of known type.

The unit 15 controls the following operation.

As the vehicle enters the measurement site the video cameras 10, 11, 12, 13 begin to display the reference markers 3 and 4, and to memorize their position relative to said reference markers, then to film the image of the reference marker, or rather the light rays emitted by the four LEDs 7 of each reference marker.

These data are obtained by the video cameras at constant time intervals while the moving vehicle is being positioned within the measurement site. Said data are used to effect the axis identification and compensation of each wheel rim.

In practice, using the data obtained during at least a portion of a wheel revolution, a substantially sinusoidal curve is constructed, of which the period is known. In the case of a geometrically perfect wheel rotating about its axis, this curve is a sinusoid and constitutes the reference sinusoid. However normally it is composed of the sum of a regular sinusoidal curve displaced from the reference sinusoid by a distance enabling the position of the video cameras relative to the wheel axes to be identified, and a series of further deviations due mainly to compensation or wheel circularity errors, which define the measurement errors.

A length of at least 6.5 metres for the measurement site has proved appropriate to enable measurements to be made on currently available automobiles.

The mean value of the deviations is the correction factor which has to be taken into account in analyzing the characteristic attitude angles.

When the vehicle has been positioned within the measurement site 1, the device of the invention evaluates any error in the positioning of the vehicle within the site 1 due to the fact that the longitudinal axis of the vehicle does not coincide with the longitudinal axis of the measurement site, and that hence the characteristic attitude angle measurements will be incorrect. The extent of the deviation between the two said axes must therefore be evaluated, and taken into account in measuring the characteristic attitude angles.

The invention identifies said deviation by means of two identical pairs of ultrasound sensors 16-19, each of which is positioned on one side of the vehicle lift 2 and has its measurement zone facing the joint between the side of the vehicle 8 and the underbody, in order to measure the distance between the sensor and the vehicle.

By comparing the measurements of the distance between each sensor and the vehicle 8, it is possible using known mathematical algorithms to obtain the position of the body of the vehicle 8 and of the relative longitudinal axis of symmetry, and hence calculate any deviation from the axis of symmetry of the measurement site 1.

The body position calculation can also be made starting from the images obtained by the video cameras. In this respect the images of the reference markers 3 and 4 define the position of the video cameras, and from these the centre of each vehicle axle can be determined, to hence define the position of the vehicle longitudinal axis.

Obviously in making the calculations the processor must take account of any correction factors as already stated.

The characteristic angles of each wheel are identified by the invention in the following manner.

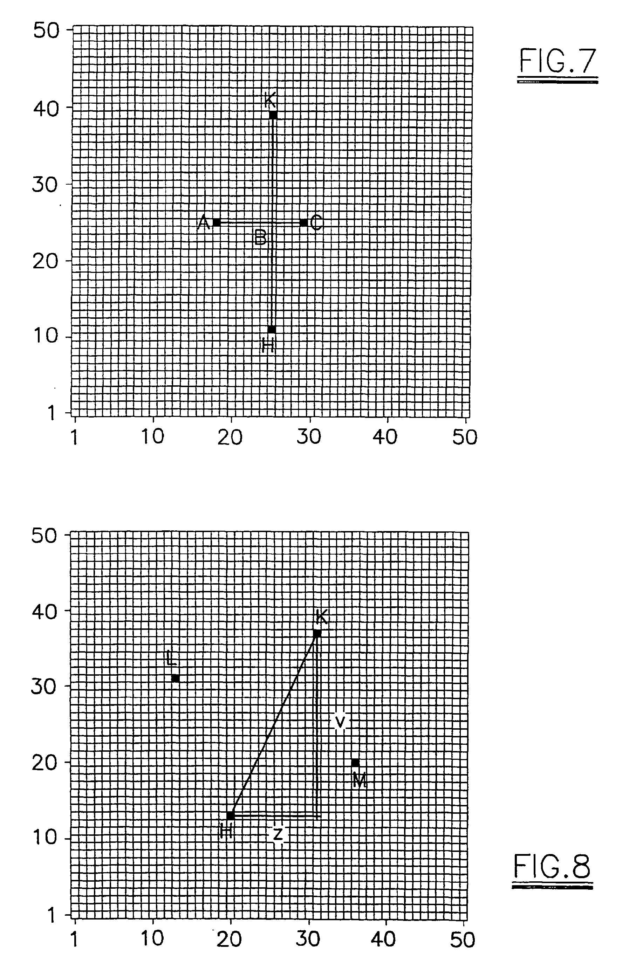

With reference to Figure 6 and Figure 8 which show the sensitive area of the left front video camera of the vehicle, the camber is determined by the simple calculation:

$$\mathtt{camber = arctg(v/z)}$$

where v is the projection of the segment HK onto the vertical axis, and z is the projection of the segment HK onto the horizontal axis.

Having determined the camber of each wheel the invention calculates the wheel convergence.

Figure 7 shows the image of the reference marker seen by a matrix CCD video camera coupled to a wheel having a certain angle of convergence. From said figure it can be seen that the segment $\overline{AC}$ is asymmetric with respect to the vertical segment. This phenomenon is due to the perspective effect and is manifested when the horizontal arm 6 of the reference marker 3 (and/or 4) is inclined to the video camera axis.

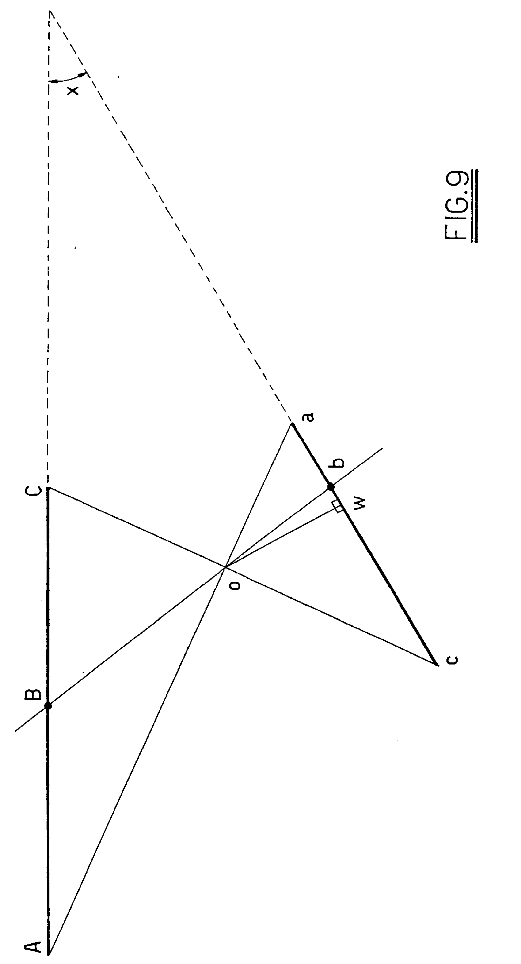

Figure 9 shows the projection of $\overline{ac}$ the segment $\overline{AC}$ onto the sensor of one of the video cameras (10...13).

As can be seen, the projection of $\overline{ab}$ the segment $\overline{AB}$ positioned in the part furthest from the sensor appears smaller than the projection $\overline{bc}$ of the segment $\overline{BC}$ positioned in the part closest to the sensor.

The calculation algorithm which enables the convergence angle to be determined is described hereinafter with reference to Figure 9.

In Figure 9, **o** represents the focal centre of the video camera and **w** represents the perpendicular projection of **o** on the segment $\overline{ac}$

The segments $\overline{wa}$, $\overline{wo}$ and $\overline{wc}$ are known, $\overline{wa}$ and $\overline{wc}$ being known because they are measurements made on the CCD video camera, $\overline{wo}$ being known because it represents the distance between the focal point of the lens indicated by the letter **o**, and the segment $\overline{ca}$.

As the angles $o\hat{w}a$ and $o\hat{w}e$ are 90°, the angles **aôw** and **côw** are determined by the following equations:

$$a\hat{o}w = arctg(\overline{wa}/\overline{wo})$$

$$c\hat{o}w = arctg(\overline{wc}/\overline{wo})$$

As the sum of the internal angles of a triangle is always 180°, and as the angles **wâo = câo** and $w\hat{c}o = a\hat{c}o$, then:

$$w\hat{a}o = c\hat{a}o = 90° - a\hat{o}w$$

$$w\hat{c}o = a\hat{c}o = 90° - c\hat{o}w$$

In this manner the triangle with vertices **aco** is unequivocally determined.

The triangle with vertices **aob** and **bow** will now be considered.

The segment $\overline{wb}$ is known, being the difference between the central position of the CCD and the intersection with the vertical segment of the reference marker.

The angle **wôb** is found from the equation:

$$w\hat{o}b = arctg(\overline{wb}/\overline{wo})$$

As the angle **aôw = wôb + bôa** and is known, the angle **bôa** can be calculated by difference, ie:

$$b\hat{o}a = a\hat{o}w - w\hat{o}b$$

It will also be noted that the angle **bôc = wôb + côw**, and that the angles **wôb** and **côw** are known.

Moreover:

$$A\hat{o}B = b\bar{o}a$$

$$B\hat{o}C = b\hat{o}c$$

being angles opposite the vertex.

From triangle theory, the segment $\overline{oB}$ is given by:

$$\overline{oB} = \overline{AB}.sin(B\hat{A}o)/sin(A\hat{o}B)$$

but the same segment is also given by:

$$\overline{oB} = \overline{BC}.sin(B\hat{C}o)/sin(B\hat{o}C)$$

hence putting these equal to each other, and knowing that $\overline{AB} = \overline{BC}$, we obtain:

$$\overline{AB}.sin(B\hat{A}o)/sin(A\hat{o}B) = \overline{AB}.sin(B\hat{C}o)/sin(B\hat{o}c)$$

Knowing that **AôB + BôC + BÂo + BĈo = 180˚**, we obtain:

$$B\hat{A}o = 180° - B\hat{C}o - B\hat{o}c - A\hat{o}B$$

Substituting in the preceding equation, we obtain:

$$Sin(180°-B\hat{C}o-B\hat{o}c-A\hat{o}B)/sin(A\hat{o}B) = sin(B\hat{C}o)/sin(B\hat{o}c)$$

hence:

$$sin(B\hat{C}o+B\hat{o}c+A\hat{o}B)/sin(A\hat{o}B) = sin(B\hat{C}o)/sin(B\hat{o}c)$$

As **BôC + AôB = AôC**, we can write:

$$sin(B\hat{C}o+A\hat{o}C)/sin(A\hat{o}B) = sin(B\hat{C}o)/sin(B\hat{o}c)$$

Developing sin(BĈo+AôC), we have:

$$[sin(B\hat{C}o).cos(A\hat{o}C) + cos(B\hat{C}o).sin(A\hat{o}C)]/sin(A\hat{o}B) = sin(B\hat{C}o)/sin(B\hat{o}c)$$

which solving as a function of BCo gives:

$$\sin(B\hat{C}o).\cos(A\hat{o}C) + \cos(B\hat{C}o).\sin(A\hat{o}C) = \sin(B\hat{C}o).\sin(A\hat{o}B)/\sin(B\hat{o}C)$$

$$\sin(B\hat{C}o).\cos(A\hat{o}C)/\sin(B\hat{C}o) + \cos(B\hat{C}o).\sin(A\hat{o}C)/\sin(B\hat{C}o) = \sin(A\hat{o}B)/\sin(B\hat{o}C)$$

from which on simplification:

$$\cos(A\hat{o}C) + \cos(B\hat{C}o).\sin(A\hat{o}C)/\sin(B\hat{C}o) = \sin(A\hat{o}B)/\sin(B\hat{o}C)$$

from which:

$$\cos(B\hat{C}o).\sin(A\hat{o}C)/\sin(B\hat{C}o) = [\sin(A\hat{o}B)/\sin(B\hat{o}C)] - \cos(A\hat{o}C)$$

from which:

$$ctg(B\hat{C}o).\sin(A\hat{o}C) = [\sin(A\hat{o}B)/\sin(B\hat{o}C)] - \cos(A\hat{o}C)$$

from which finally ctg($B\hat{C}$o) is obtained as:

$$ctg(B\hat{C}o) = \{[\sin(A\hat{o}B)/\sin(B\hat{o}C)] - \cos(A\hat{o}C)\}/\sin(A\hat{o}C)$$

The angle $B\hat{C}$o can be obtained from ctg($B\hat{C}$o) as:

$$B\hat{C}o = arcctg(B\hat{C}o)$$

Knowing the angle ($B\hat{C}$o) the convergence angle x can be calculated:

$$convergence = x = 180° - a\hat{C}o - 180° - BCo = -a\hat{C}o - BCo$$

Once the convergence and camber values have been determined it is simple to calculate the maximum steering measurement, the incidence measurement, the knuckle pivot inclination measurement and the longitudinal/transverse misalignment measurement (set-back).

The maximum steering measurement coincides with the convergence measurement less an initial offset.

The incidence measurement is based on the variation in the camber values at known steering angles, for example with the wheel steered to +10° and -10°. The calculation algorithms then use the steering and camber values and are the same as traditional aligners.

The measurement of the knuckle pivot inclination angle is based on forward and rearward rotation of the wheel at known steering angles. For these measurements the head has to be locked to make it rigid with the wheel, then its rotation about its axis is measured using the same calculations used to obtain the convergence, but applied to the segment KH of the image read on the video camera. The wheel rotation can also be measured by an angle transducer applied between the video camera and the support bracket. The calculation algorithms, which use the steering values and the relative wheel rotation values, are the same as traditional aligners.

The set-back angle measurement is made taking account both of the distance between the video cameras and the reference markers 3 and 4, and the spatial position of the wheels within the reference system. As all the angles of Figure 9 and the length of the segment AC are known, the distance between the video camera and the reference marker, and hence the vehicle wheel base are easily determined.

**Claims**

1. A method for measuring the characteristic attitude angles of a motor vehicle positioned within a measurement site provided with fixed reference markers, **characterised by**: fixing on each wheel a video camera of active matrix type suspended on an axis close to the axis of rotation of the wheel, and with the lens constantly orientated towards a fixed reference marker comprising at least two points; reading on the video camera screen the position of the at least two points of the respective fixed reference marker; translating the reading into a signal ; representing said signal by at least one coordinate within a flat reference system; processing the values of said coordinates to obtain therefrom the values of the characteristic angles by means of trigonometric algorithms.

2. A method as claimed in claim 1, **characterised in that** the fixed reference marker comprises four points lying in a plane perpendicular to the axis of the measurement site.

3. A method as claimed in claim 2, **characterised in that** the four points are positioned on two perpendicular axes in positions symmetrical about the origin.

4. A method as claimed in claim 3, **characterised in that** the two axes are a vertical axis and a horizontal axis.

5. A method as claimed in claim 1, **characterised in that** the reading of the image of the fixed reference marker on the respective video camera of each wheel is taken with the wheel in movement.

6. A method as claimed in claim 5, **characterised in that** the readings taken with the wheel in movement are taken at regular intervals while the wheel undergoes a rotation equal to a portion of a revolution.

7. A method as claimed in claim 5, **characterised in that** the readings taken with the wheel in movement are taken while the vehicle is entering the measurement site.

8. A method as claimed in the preceding claims, **characterised in that** the mean of the readings taken with the wheel in movement is used to calculate a correction factor for possible deviation of the video camera suspension axis from the axis of rotation of the wheel.

9. A method as claimed in the preceding claims, **characterised in that** the mean of the readings taken with the wheel in movement is used to calculate a correction factor which is used in calculating the characteristic angles and takes account of any geometrical error in the wheel circularity.

10. A method as claimed in the preceding claims, **characterised in that** the readings taken with the wheel stationary, and the correction factors, are used to determine the vehicle longitudinal axis and its angular deviation from the measurement site axis.

11. A method as claimed in claim 10, **characterised in that** the value of said deviation is used in calculating the characteristic attitude angles.

12. A device for measuring the characteristic attitude angles of a motor vehicle, comprising a measurement site such as a vehicle lift, a fixed reference marker positioned at the front of the measurement site, a device to be associated with each wheel to receive signals from the fixed reference marker, and a processor to process said signals and to calculate the characteristic angles, **characterised in that** the device to be associated with each wheel is a video camera of the active matrix type arranged to be suspended to rotate about an axis close to the axis of rotation of the wheel in such a manner as to always have its lens pointing towards the fixed reference marker.

13. A device as claimed in claim 12, **characterised in that** the fixed reference marker consists of four light emitting diodes positioned at the ends of a cross with four horizontal arms, which lies in a plane perpendicular to the axis of the measurement site.

14. A device as claimed in claim 12, **characterised in that** one of the arms of the cross is perpendicular to the plane in which the vehicle rests within the measurement site.

15. A device as claimed in claim 12, **characterised in that** the fixed reference markers are two in number, positioned in front of the vehicle sides and spaced therefrom such that each one is always completely visible by the video cameras positioned on those wheels lying on the same side of the vehicle.

16. A device as claimed in claim 12, **characterised in that** at least one pair of ultrasound distance sensors is positioned on each side of the measurement site.

17. A device as claimed in claim 12, **characterised in that** the measurement site has a length at least exceeding 6.5 metres.

**Patentansprüche**

1. Verfahren zum Messen der charakteristischen Lagewinkel eines innerhalb eines mit festen Referenzmarkierungen versehenen Messortes positionierten Kraftfahrzeugs,
**gekennzeichnet durch**
Befestigen einer Videokamera der aktiven Matrix-Bauart an jedem Rad, welche an einer zu der Rotationsachse des Rades naheliegenden Achse aufgehängt ist und deren Linse konstant in Richtung einer fixen Referenzmarkierung, welche wenigstens zwei Punkte aufweist, orientiert ist;
Lesen der Position der wenigstens zwei Punkte der entsprechenden fixen Referenzmarkierungen auf dem Bildschirm der Videokamera;
Übersetzen des Messwerts in ein Signal; Repräsentieren des Signals **durch** wenigstens eine Koordinate innerhalb eines ebenen Referenzsystems; Verarbeiten der Werte der Koordinaten, um daraus die Werte der charakteristischen Winkel mittels trigonometrischer Algorithmen zu erhalten.

2. Verfahren nach Anspruch 1,
**dadurch gekennzeichnet , dass**
die fixe Referenzmarkierung vier Punkte aufweist, die innerhalb einer Ebene liegen, welche senkrecht zu der Achse des Messorts ist:

3. Verfahren nach Anspruch 2,
**dadurch gekennzeichnet , dass**
die vier Punkte auf zwei senkrechten Achsen in Positionen symmetrisch zu dem Nullpunkt positioniert sind.

4. Verfahren nach Anspruch 3,
**dadurch gekennzeichnet , dass**
die zwei Achsen eine vertikale und eine horizontale Achse sind.

5. Verfahren nach Anspruch 1,
**dadurch gekennzeichnet , dass**
der Messwert des Bildes der fixen Referenzmarkierung auf der entsprechenden Videokamera von jedem Rad genommen wird, wenn sich das Rad in Bewegung befindet.

6. Verfahren nach Anspruch 5,
**dadurch gekennzeichnet , dass**
die Messwerte, die genommen werden, wenn sich das Rad in Bewegung befindet, in gleichmäßigen Abständen genommen werden, während das Rad einer Rotation unterzogen wird, welche gleich einem Abschnitt einer Umdrehung ist.

7. Verfahren nach Anspruch 5,
**dadurch gekennzeichnet, dass**

die Messwerte, welche genommen werden, während sich das Rad in Bewegung befindet, genommen werden während das Fahrzeug den Messort betritt.

**8.** Verfahren nach einem der vorhergehenden Ansprüche,
**dadurch gekennzeichnet , dass**
der Durchschnittswert der Messwerte, welche genommen werden, wenn sich das Rad in Bewegung befindet, verwendet wird, um einen Korrekturfaktor für eine mögliche Abweichung der Lagerungsachse der videokamera von der Rotationsachse des Rades zu berechnen.

**9.** Verfahren nach einem der vorhergehenden Ansprüche,
**dadurch gekennzeichnet , dass**
der Durchschnittswert der Messwerte, die genommen werden, wenn sich das Rad in Bewegung befindet, verwendet wird, um einen Korrekturfaktor zu berechnen, welcher beim Berechnen der charakteristischen Winkel verwendet wird und jegliche geometrische Fehler bezüglich der Rundheit des Rades mit einberechnet.

**10.** Verfahren nach einem der vorhergehenden Ansprüche,
**dadurch gekennzeichnet , dass**
die Messwerte, die genommen werden, wenn das Rad stationär ist, sowie die Korrekturfaktoren verwendet werden, um die Längsachse des Fahrzeugs und ihre Winkelabweichung von der Achse des Messorts zu ermitteln.

**11.** Verfahren nach Anspruch 10,
**dadurch gekennzeichnet , dass**
der Wert der Abweichung bei der Berechnung der charakteristischen Lagewinkel verwendet wird.

**12.** Vorrichtung zum Messen der charakteristischen Lagewinkel eines Kraftfahrzeugs, welche einen Messort, wie zum Beispiel eine Fahrzeug-Hebebühne, eine fixe Referenzmarkierung, welche an der Vorderseite des Messorts angeordnet ist, eine mit jedem Rad zu verbindende Einrichtung zum Empfangen von Signalen von der fixen Referenzmarkierung und einen Prozessor zum Verarbeiten der Signale und zum Berechnen der charakteristischen Winkel aufweist,
**dadurch gekennzeichnet , dass**
die mit jedem Rad zu verbindende Einrichtung eine Videokamera der aktiven Matrix-Bauart ist, welche dafür vorgesehen ist, aufgehängt zu werden, um um eine Achse zu rotieren, welche nahe zu der Rotationsachse des Rades ist, und zwar derart, dass die Linse stets in Richtung der fixen Referenzmarkierung zeigt.

**13.** Vorrichtung nach Anspruch 12,
**dadurch gekennzeichnet , dass**
die fixe Referenzmarkierung aus vier lichtemittierenden Dioden besteht, die an den Enden eines Kreuzes mit vier horizontalen Armen positioniert sind, welches in einer Ebene senkrecht zu der Achse des Messorts liegt.

**14.** Vorrichtung nach Anspruch 12,
**dadurch gekennzeichnet , dass**
einer der Arme des Kreuzes senkrecht zu der Ebene ist, in welcher das Fahrzeug innerhalb des Messorts ruht.

**15.** Vorrichtung nach Anspruch 12,
**dadurch gekennzeichnet , dass**
die fixen Referenzmarkierungen zwei an der Zahl sind, vor den Seiten des Kraftfahrzeugs positioniert und davon derart beabstandet sind, dass jede stets vollständig durch die Videokameras sichtbar sind, welche auf denjenigen Rädern positioniert sind, die auf derselben Seite des Fahrzeugs liegen.

**16.** Vorrichtung nach Anspruch 12,
**dadurch gekennzeichnet , dass**
wenigstens ein Paar Ultraschallabstandssensoren auf jeder Seite des Messorts angeordnet sind.

**17.** Vorrichtung nach Anspruch 12,
**dadurch gekennzeichnet , dass**
der Messort eine Länge aufweist, die wenigstens 6,5 Meter überschreitet.

**EP 0 943 890 B1**

**Revendications**

1.  Procédé de mesure des angles caractéristiques d'attitude d'un véhicule à moteur disposé dans un site de mesure ayant des marqueurs fixes de référence, **caractérisé par** la fixation sur chaque roue d'une caméra vidéo du type à matrice active, suspendue sur un axe proche de l'axe de rotation de la roue, et dont l'objectif est constamment orienté vers un marqueur fixe de référence comportant au moins deux points, la lecture, sur l'écran de la caméra vidéo, de la position des deux points au moins du marqueur fixe respectif de référence, la transformation de la lecture en un signal, la représentation du signal, la représentation du signal par au moins une coordonnée dans un système plan de référence, et le traitement des valeurs de coordonnées pour l'obtention à partir de celles-ci des valeurs des angles caractéristiques à l'aide d'algorithmes trigonométriques.

2.  Procédé selon la revendication 1, **caractérisé en ce que** le marqueur fixe de référence comporte quatre points qui se trouvent dans un plan perpendiculaire à l'axe du site de mesure.

3.  Procédé selon la revendication 2, **caractérisé en ce que** les quatre points sont disposés sur deux axes perpendiculaires à des positions symétriques autour de l'origine.

4.  Procédé selon la revendication 3, **caractérisé en ce que** les deux axes sont un axe vertical et un axe horizontal.

5.  Procédé selon la revendication 1, **caractérisé en ce que** la lecture de l'image du marqueur fixe de référence sur la caméra vidéo respective de chaque roue est prise alors que la roue est en mouvement.

6.  Procédé selon la revendication 5, **caractérisé en ce que** les lectures effectuées avec la roue en mouvement sont réalisées à intervalles réguliers alors que la roue subit une rotation égale à une portion de tour.

7.  Procédé selon la revendication 5, **caractérisé en ce que** les lectures effectuées avec la roue en mouvement sont réalisées alors que le véhicule pénètre dans le site de mesure.

8.  Procédé selon l'une quelconque des revendications précédentes, **caractérisé en ce que** la moyenne des lectures effectuées avec la roue en mouvement est utilisée pour le calcul d'un facteur de correction d'un écart possible de l'axe de suspension de la caméra vidéo par rapport à l'axe de rotation de la roue.

9.  Procédé selon l'une quelconque des revendications précédentes, **caractérisé en ce que** la moyenne des lectures effectuées avec la roue en mouvement est utilisée pour le calcul d'un facteur de correction qui est utilisé pour le calcul des angles caractéristiques et prend en compte toute erreur géométrique de circularité de la roue.

10. Procédé selon l'une quelconque des revendications précédentes, **caractérisé en ce que** les lectures effectuées alors que la roue est fixe et les facteurs de correction sont utilisés pour déterminer l'axe longitudinal du véhicule et son écart angulaire par rapport à l'axe du site de mesure.

11. Procédé selon la revendication 10, **caractérisé en ce que** la valeur de l'écart est utilisée pour le calcul des angles caractéristiques d'attitude.

12. Appareil de mesure des angles caractéristiques de l'attitude d'un véhicule à moteur, comprenant un site de mesure tel qu'un élévateur de véhicule, un marqueur fixe de référence disposé à l'avant du site de mesure, un dispositif destiné à être associé à chaque roue pour recevoir des signaux du marqueur fixe de référence, et un processeur destiné à traiter les signaux et à calculer les angles caractéristiques, **caractérisé en ce que** le dispositif destiné à être associé à chaque roue est une caméra vidéo du type à matrice active destinée à être suspendue afin qu'elle tourne autour d'un axe proche de l'axe de rotation de la roue et que son objectif soit toujours dirigé vers le marqueur fixe de référence.

13. Appareil selon la revendication 12, **caractérisé en ce que** le marqueur fixe de référence est constitué de quatre diodes photoémissives disposées aux extrémités d'une croix ayant quatre bras horizontaux et qui se trouve dans un plan perpendiculaire à l'axe du site de mesure.

14. Appareil selon la revendication 12, **caractérisé en ce que** l'un des bras de la croix est perpendiculaire au plan dans lequel se trouve le véhicule dans le site de mesure.

**15.** Appareil selon la revendication 12, **caractérisé en ce que** les marqueurs fixes de référence sont au nombre de deux et sont disposés en avant des côtés du véhicule et espacés par rapport à ceux-ci de manière que chacun soit toujours totalement visible par les caméras vidéo disposées sur les roues qui se trouvent du même côté du véhicule.

**16.** Appareil selon la revendication 12, **caractérisé en ce qu'**une paire au moins de capteurs de distance à ultrasons est disposée de chaque côté du site de mesure.

**17.** Appareil selon la revendication 12, **caractérisé en ce que** le site de mesure a une longueur qui dépasse au moins 6,5 m.

FIG.1

FIG.2

FIG.3

FIG.4

EP 0 943 890 B1

FIG.5

FIG.6

FIG.7

FIG.8

FIG.9

EP 0 943 890 B1